# EUROPÄISCHE PATENTANMELDUNG

(11) **EP 2 020 735 A2**
(43) Veröffentlichungstag der Anmeldung: **04.02.2009**
(21) Anmeldenummer: 08013852.2
(22) Anmeldetag: 01.08.2008
(51) Int. Cl.: H02K 9/19, H02K 5/132

(54) **Unterwassermotor mit Wärmetauscher**

(30) Priorität: 01.08.2007 DE 102007036032
(71) Anmelder: RITZ Pumpenfabrik GmbH & Co. KG, 73527 Schwäbisch Gmünd (DE)
(72) Erfinder: Neiszer, Johann, 73525 Schwäbisch-Gmünd (DE)
(74) Vertreter: Eisenführ, Speiser & Partner

(57) **Zusammenfassung**

Die Erfindung betrifft einen Elektromotor für den Unterwassereinsatz, insbesondere für Unterwasserpumpen, der einem Rotor, einen den Rotor umschließenden Stator und einen Wärmetauscher enthält, der einen geschlossenen Innenkühlkreislauf, in dem ein erstes Kühlmedium zirkuliert, und einen Außenkühlkreislauf aufweist, in dem ein zweites Kühlmedium zirkuliert. Weiterhin ist vorgesehen, dass der Außenkühlkreislauf offen ist und dass mindestens ein Mediumsführungskanal des Innenkühlkreislaufs im Querschnittsbereich der Statorbleche verlaufend angeordnet ist.

## Beschreibung

Die Erfindung betrifft einen Elektromotor für den Unterwassereinsatz, insbesondere für Unterwasserpumpen, gemäß dem Oberbegriff des Anspruchs 1. Insbesondere betrifft die Erfindung einen Elektromotor mit einem Rotor, einem den Rotor umschließenden Stator und mit einem Wärmetauscher, der einen geschlossenen Innenkühlkreislauf, in dem ein erstes Kühlmedium zirkuliert, und einen Außenkühlkreislauf aufweist, in dem ein zweites Kühlmedium zirkuliert.

Solche Motoren kommen vor allem bei Unterwassermotorpumpen beispielsweise zur Wassergewinnung, -aufbereitung, -versorgung oder zur Wasserhaltung zum Einsatz. Die Motoren befinden sich bei dieser Art von Anwendung typischerweise unterhalb der eigentlichen Pumpeinheit und werden soweit in einen Brunnen oder ein Bohrloch abgesenkt, bis sie vollständig unter der Wasserlinie stehen. Da die Kosten für ein Bohrloch unter anderem von dessen Durchmesser abhängen, besteht der Wunsch die Durchmesserabmessungen der Unterwassermotorpumpen so gering wie möglich zu halten. Bevorzugt sind die Pumpen einschließlich Motor im Durchmesser nicht wesentlich größer als das sich anschließende Steigrohr und füllen das Bohrloch vollständig aus. Deshalb sind die Motoren in einem sehr engen, meist zylinderförmigen, von dem Außenmantel begrenzten Gehäuse untergebracht. Dies erschwert einerseits die Kühlung der Motoren, weshalb diese in der Regel vollständig mit einem Kühlmedium befüllt werden. Andererseits sind die Motoren - einmal in das Bohrloch eingesetzt - von außen nicht mehr ohne Weiteres zugänglich. Sie müssen deshalb im Falle eines Defekts samt Steigleitung aus dem Bohrloch herausgenommen werden. Auf Grund des damit verbundenen Aufwands müssen diese Motoren zuverlässig laufen und sehr wartungsarm sein. Zu diesem Zweck wird als Kühlmedium, insbesondere bei höheren Temperaturen des Fördermediums, meistens Öl verwendet, welches zugleich Schmierstoff für die Motorwellenlagerung ist.

Das Kühlmedium zirkuliert bei den bekannten Pumpen zwischen den zu kühlenden Teilen, insbesondere zwischen den Statorwicklungen und Lagern einerseits und der Innenwand des Statormantels oder des Motorgehäuses, die den Außenmantel des Motors bilden, andererseits und transportiert so die Wärme nach außen zum Außenmantel des Motors hin ab. Dieser besteht typischerweise aus nicht-rostendem Stahl und wird seinerseits von außen durch das den Pumpenmotor umgebende Wasser gekühlt. Ist die Oberfläche des Außenmantels des Motors zu klein, um eine ausreichende Kühlung zu gewährleisten, wird bekanntermaßen zusätzlich ein Wärmetauscher axial an den zylindrischen Außenmantel angeflanscht, dessen Oberfläche beispielsweise durch Lamellen oder einem Rohrsystem vergrößert ist.

Bei der Verwendung eines solchen axial an den zylindrischen Außenmantel des Pumpenmotors angeflanschten Wärmetauschers vergrößert sich aber die Baulänge der Unterwassermotorpumpe, wodurch ihr Einsatzgebiet, beispielsweise bei geringen Bohrtiefen, eingeschränkt sein kann und sich weiterhin ihre Handhabung erschwert. Um diese Nachteile zu beheben, wurden Wärmetauscher auf der Außenseite der Motoren angebracht.

Ein solcher Wärmetauscher ist in dem deutschen Gebrauchsmuster 297 15 079 beschrieben. Um einen Wärmetauscher möglichst einfach herzustellen, wurde bei dieser bekannten Lösung auf die Außenseite des Statormantels eine Spiralfeder aufgebracht, deren Innendurchmesser geringfügig kleiner ist, als der Außendurchmesser des Statormantels und deren Windungen nicht aneinander liegen. Über diese Feder wurde ein weiterer Mantel angeordnet, der am Außendurchmesser der Feder anliegt und diese vollständig umschließt. Dadurch liegt die Feder sowohl am Statormantel wie auch am zusätzlich angebrachten Außenmantel an und bildet mit einem spiralförmigen um den Statormantel herum verlaufenden Strömungspfad. Am oberen Ende des Wärmetauschers befinden sich Strömungsöffnungen, die mit der Saugseite der Pumpeneinheit in Verbindung stehen, um ein Durchströmen des Wärmetauschers zu gewährleisten.

Der vorbeschriebene Motor mit Wärmetauscher weist aber entscheidende Nachteile auf. So ist beispielsweise kein innerer Kühlkreislauf oder ein inneres Kühlmedium vorgesehen. Dadurch ist der Wärmetransport vom Motorinneren zu dessen Oberfläche nicht sehr effektiv und der Rotor bleibt wegen der schlechten Kühlung im Inneren permanent warm, was zu Schäden am Rotor führen kann. Weiterhin wird durch das Anbringen des Wärmetauschers auf der Außenfläche des Stators der Durchmesser des Motors erhöht, wodurch auch ein Bohrloch, in dem der Unterwassermotor eingesetzt werden soll, einen größeren Durchmesser haben muss. Dies ist aber wiederum mit zusätzlichen Kosten verbunden. Weiterhin steigt mit zunehmender Bohrlochtiefe die Temperatur des Fördermediums, wodurch sich der Wirkungsgrad des Wärmetauschers verschlechtert, da hier bei konstanter Förderleistung eine immer gleichbleibende Menge kühlenden Fördermediums durch den Wärmetauscher strömt.

Aufgabe der vorliegenden Erfindung ist es, die vorgenanten Nachteile zu beseitigen und einen Elektromotor für den Unterwassereinsatz bereitzustellen, der bei einfachem Aufbau über eine effektive Kühlung verfügt, die weiterhin den Einsatzbedingungen entsprechend einstellbar ist.

Die vorstehende Aufgabe wird durch die Merkmale des Anspruchs 1 gelöst. In den sich daran anschließenden Ansprüchen 2 bis 23 finden sich vorteilhafte Ausgestaltungen hierzu.

Zur Lösung der Aufgabe wird erfindungsgemäß ein Elektromotor für den Unterwassereinsatz, insbesondere für Unterwasserpumpen, mit einem Rotor, mit einem den Rotor umschließenden Stator und mit einem Wärmetauscher, der einen geschlossenen Innenkühlkreislauf, in dem ein erstes Kühlmedium zirkuliert, und einen Außenkühlkreislauf aufweist, in dem ein zweites Kühlmedium zirkuliert, vorgeschlagen. Bei dem erfindungsgemäß vorgeschlagenen Elektromotor ist der Außenkühlkreislauf weiterhin offen und der mindestens eine Mediumsführungskanal des Innenkühlkreislaufs ist im Querschnittsbereich der Statorbleche verlaufend angeordnet. Durch diese Anordnung des Mediumsführungskanals des Innenkühlkreislaufs wird die durch das erste Kühlmedium im Rotorbereich aufgenommene Wärme effektiv in den Statorbereich transportiert, wo sie an den kühleren Stator abgegeben werden kann. Wenn das zweite Kühlmedium das Fördermedium ist, wird weiterhin bei einer Gestaltung des Außenkühlkreislaufs als offener Kreislauf permanent kaltes Fördermedium als Kühlmittel zum Kühlen des Stators verwendet. Dadurch wird eine konstante hohe Kühlleistung erreicht.

Erfindungsgemäß steht der Außenkühlkreislauf über wenigstens eine Zuströmöffnung und mindestens eine Abströmöffnung mit dem zweiten Kühlmedium in Verbindung, wodurch ein Durchströmen des Außenkühlkreislaufs gewährleistet wird. Durch das Vorsehen weiterer Zu- und Abströmöffnungen kann die Menge des durch den Außenkühlkreislauf strömenden Mediums weiter gesteigert werden.

Die Zu- und Abströmöffnungen des wenigstens einen Mediumsführungskanals des Außenkühlkreislauf können an unterschiedlichen Stellen des Motors vorgesehen werden. In einer vorteilhaften Ausgestaltung münden sie an den Stirnseiten des Stators, wodurch eine einfache lineare Gestaltung des Mediumsführungskanals möglich ist.

Weiterhin werden durch die strömungsgünstige Gestaltung der Zu- und Abströmöffnungen Strömungswiderstände verringert und so die Strömungsverluste und Verschleiß minimiert. Dies kann beispielsweise durch eine trichterförmige Erweiterung der Öffnungen geschehen.

In einer weiterhin vorteilhaften Ausführung des erfindungsgemäßen Motors ist der wenigstens eine Mediumsführungskanal des Außenkühlkreislaufs in radialer Richtung im Stator verlaufend angeordnet ist. Dieser Verlauf des Mediumsführungskanals lässt sich im Vergleich mit einem beispielsweise spiralförmig verlaufenden Kanal fertigungstechnisch günstig herstellen, wodurch sich Fertigungskosten einsparen lassen.

Ist auch der wenigstens eine Mediumsführungskanal des Außenkühlkreislaufs in axialer Richtung durch den Stator verlaufend angeordnet, führt das neben der auch hier geltenden, oben beschriebenen Kostensenkung weiterhin zu einem effektiven Wärmeaustausch der dann dicht beieinander liegenden Mediumsführungskanäle des Außen- und Innenkühlkreislaufs.

Es ist dabei vorteilhaft, wenn der mindestens eine Mediumsführungskanal des Innenkühlkreislaufs in radialer Richtung im Bereich des Außenumfangs der Statorbleche verlaufend angeordnet ist. Der so angeordnete Mediumsführungskanal liegt weitestmöglich außen und damit am dichtesten am Statormantel, der durch das zweite Kühlmedium umströmt und gekühlt wird, wodurch eine besonders effektive Wärmeabgabe an den Statormantel den Wirkungsgrad des Wärmetauschers weiter steigert.

Es ist dabei weiterhin vorteilhaft, wenn der mindestens eine Mediumsführungskanal des Innenkühlkreislaufs in radialer Richtung nach außen hin offen ist und der Mediumsführungskanal durch den Statormantel abgeschlossen ist. So bildet der Statormantel selbst einen Abschnitt der Wärmeaustauschfläche. Da hier zusätzliche Wärmeübergangswiderstände, z.B. durch weitere Kanalwandungen, entfallen, findet ein effektiver Wärmeübergang statt.

Selbstverständlich ist es möglich, nur einen Mediumsführungskanal für den Außenkühlkreislauf vorzusehen. Eine Erhöhung der Wärmeaustauschleistung kann aber sehr einfach dadurch erreicht werden, dass mehrere Mediumsführungskanäle für den Außenkühlkreislauf vorgesehen sind.

Sind die Mediumsführungskanäle des Außenkühlkreislaufs gleichmäßig im Umfangsrichtung im Stator verteilt, wird weiterhin eine gleichmäßige Wärmeabfuhr im Stator und damit auch eine gleichmäßige Temperaturverteilung im Motor erreicht.

Durch das Vorsehen mehrerer Mediumsführungskanäle für den Innenkühlkreislauf lässt sich auch hier die Wärmeaustauschleistung steigern. Sind die Mediumsführungskanäle des Innenkühlkreislaufs gleichmäßig im Umfangsrichtung im Bereich des Außenumfangs der Statorbleche verteilt, erfolgt auch im Rotor eine gleichmäßige Wärmeabfuhr.

Die Mediumsführungskanäle des Außenkühlkreislaufs können auf verschiedene Weise realisiert werden. Besonders günstig lassen sie sich durch Mediumsführungsrohre bilden, die in den Ausnehmungen in den Statorbleche angeordnet sind, welche die Mediumsführungskanäle für des Innenkühlkreislaufs bilden. Solche Mediumsführungsrohre lassen sich im Bereich der Mündungsöffnungen an den Flanschen einfach abdichten, wodurch die mediumsdichte Abdichtung des Motors gewährleistet werden kann und erleichtern die Montage. Weiterhin werden die Mediumsführungsrohre in dieser Anordnung direkt von dem ersten Kühlmittel des Innenkühlkreislaufs umströmt, wodurch ein direkter und effektiver Wärmeübergang möglich ist.

In einer vorteilhaften Ausführung sind die Ausnehmungen, welche die Mediumsführungskanäle für des Innenkühlkreislaufs bilden, kreisförmige Ausnehmungen, deren Durchmesser größer ist als der Außendurchmesser der Mediumsführungsrohre des Außenkühlkreislaufs. Mit einem kreisförmigen Querschnitt sind die Mediumsführungskanäle für des Innenkühlkreislaufs optimal an die Mediumsführungsrohre des Außenkühlkreislaufs angepasst. Weiterhin kann durch die Wahl des Durchmessers die Menge des ersten Kühlmediums festgelegt werden, die die Mediumsführungsrohre des Außenkühlkreislaufs umströmen, womit die Wärmeaustauschleistung beeinflusst werden kann.

In einer weiteren vorteilhaften Ausführung des erfindungsgemäßen Motors sind die Mediumsführungskanäle des Außenkühlkreislaufs im Statormantel angeordnet. In dieser Ausführung entfällt das Abdichten der Mediumsführungskanäle gegen den Motorinnenraum. Weiterhin wird die Gestaltung der Statorbleche und die Montage des Motors weiter vereinfacht.

Dabei ist es vorteilhaft, die Mediumsführungskanäle des Außenkühlkreislaufs im Statormantel durch einen Gießvorgang herzustellen. Diese Art der Herstellung ist vor allem bei hohen Stückzahlen kostengünstig. Selbstverständlich können die Mediumsführungskanäle des Außenkühlkreislaufs im Statormantel auch durch eine spanende Bearbeitung hergestellt werden, beispielsweise durch Bohren oder Fräsen.

In einer besonders vorteilhaften Ausführung ist der Stator modular aus in Umfangsrichtung aneinanderfügbare Kreissegmenten oder durch axial aneinanderfügbare Ringsegmente gebildet. Durch die modulare Ausführung entstehen kleinere Bauteile, die einfache herzustellen und hand zu haben sind. Weiterhin ist es möglich beschädigte Teile, wie solche die beispielsweise besonderen Verschleiß unterliegen, auszutauschen, ohne den gesamten Statormantel austauschen zu müssen, was zu weiteren Kosteneinsparungen führt. Durch einen modularen Aufbau ist aber auch eine Anpassung der Größe des Stators an verschieden große Rotoren möglich, wodurch sich leicht eine Leistungsanpassung des Motors an verschiedene Pumpeneinheiten erreichen lässt.

Da sich die Belastung des Motors ändern kann und damit auch seine Erwärmung im Betrieb, ist es vorteilhaft, wenn die Durchflussmenge des durch die Mediumsführungskanäle des Außenkühlkreislaufs fließenden zweiten Kühlmediums einstellbar ist. So kann die Kühlleistung an die Erwärmung des Motors angepasst und eine Überhitzung mit eventuellen Folgeschäden vermieden werden. Zusätzlich kann so auf sich verändernde Temperaturen des zweiten Kühlmediums reagiert werden.

Dabei ist es vorteilhaft, wenn zur Regulierung der Durchflussmenge des durch die Mediumsführungskanäle des Außenkühlkreislaufs fließenden zweiten Kühlmediums am pumpenseitigen Ende des Stators ein Regelelement angeordnet ist. Über ein solche Regelelement kann die Durchflussmenge beispielsweise fest eingestellt werden. Ist das Regelelement eine im Wesentlichen zylinderförmige Drossel, kann durch deren Austausch die Durchflussmenge jederzeit den Bedingungen entsprechend neu eingestellt werden.

Weitere vorteilhafte Ausgestaltungen sowie Ausführungsbeispiele der Erfindung werden nachstehend im Zusammenhang mit der Beschreibung einer Ausführungsform und in Verbindung mit den beigefügten Zeichnungsfiguren näher erläutert. Die bei der Beschreibung des Ausführungsbeispiels verwendeten Begriffe "oben", "unten", "links" und "rechts" beziehen sich auf die Zeichnungsfiguren in einer Ausrichtung mit normal lesbaren Bezugszeichen und Figurenbezeichnungen. Es zeigen:
- Fig. 1: eine Schnittdarstellung des erfindungsgemäßen Elektromotors entspre- chend einer ersten Ausführung;
- Fig. 2: einen Ausschnitt einer Querschnittdarstellung entlang eines Sta- torblechs des erfindungsgemäßen Elektromotors entsprechend dem Ausführungsbeispiel der Fig.1;
- Fig.3: einen Ausschnitt einer Querschnittdarstellung entlang eines Sta- torblechs eines weiteren Ausführungsbeispiels des erfindungsgemäßen Elektromotors;
- Fig. 4: eine Schnittdarstellung einer Motor-Pumpen-Einheit mit dem erfin- dungsgemäßen Motor entsprechend dem Ausführungsbeispiel der Fig.1.

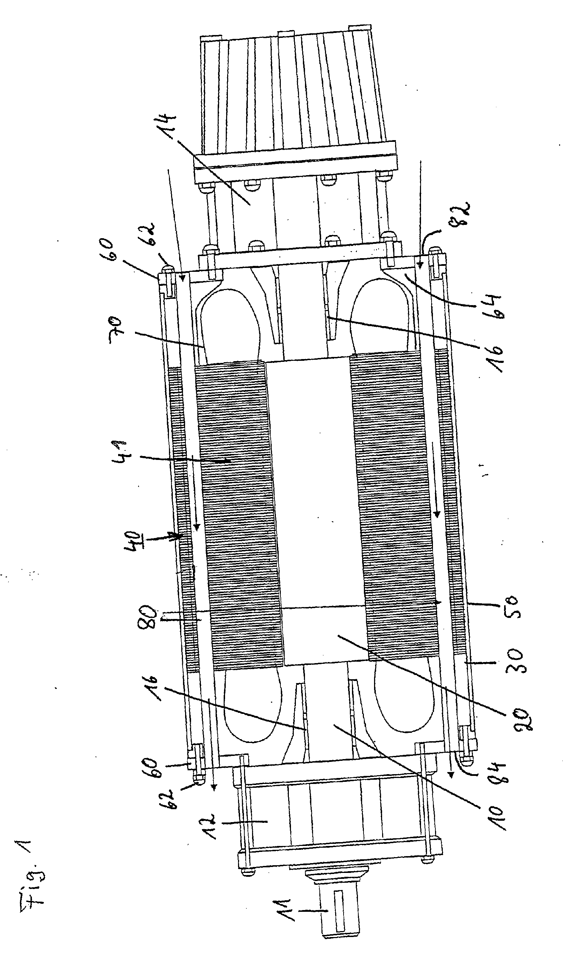

Fig. 1 zeigt eine Schnittdarstellung des erfindungsgemäßen Elektromotors für den Unterwassereinsatz entsprechend einer ersten Ausführung. Zur Vereinfachung der Darstellung wurden die Bauteile, die zum elektrischen Anschluss und Betrieb des Motors notwendig sind, in allen Zeichnungsfiguren vereinfacht dargestellt oder weggelassen, da diese bekannt sind.

Der Elektromotor entsprechend Fig.1 weist eine Motorwelle 10, einen Rotor 20, der die Motorwelle 10 abschnittsweise koaxial umschließt und dreh- sowie axialfest mit dieser verbunden ist, einen Stator 30, der wiederum den Rotor 20 koaxial umschließt, sowie Lagereinheiten 12, 14 auf, die die Motorwelle 10 im Bereich ihrer jeweiligen stirnseitigen Enden axialfest aber drehbar abstützen. Der Elektromotor enthält weiterhin einen Wärmetauscher 40, der einen geschlossenen Innenkühlkreislauf und einem offenen Außenkühlkreislauf aufweist und dessen Aufbau und Funktion später genau beschrieben werden.

Der Rotor 20 weist üblicherweise eine nicht näher dargestellten Rotorwicklung auf oder ist als sogenannter Käfigläufer ausgebildet. Der im wesentlichen zylindrische Rotor 20 erstreckt sich etwa über ein Drittel der Länge der in Fig. 1 horizontal ausgerichteten Motorwelle 10 und ist ungefähr mittig auf ihr angeordnet. Die aus dem Rotor 20 herausragenden Enden der Motorwelle 10 sind in den Lagereinheiten 12, 14 axial fest, aber drehbar abgestützt. Das in der Darstellung linke Ende 11 der Motorwelle 10 ragt über die Lagereinheit 12 nach links hinaus, um hier beispielsweise eine Pumpe anschleißen zu können. Um eine mediumsdichte Abdichtung zwischen der Motorwelle 10 und den Lagereinheiten 12, 14 zu gewährleisten sind auf den Wellenabschnitten zwischen dem Rotor 20 und den Lagereinheiten 12, 14 jeweils Dichtungsabschnitte 16 vorgesehen, die beispielsweise als Labyrinthdichtungen ausgeführt sein können. Die Motorwelle 10 besteht dabei üblicherweise aus einem geeigneten Stahl.

Der Stator 30 ist aus einer Anzahl von Statorblechen 41, dem Statormantel 50, der die Statorbleche 41 umschließt und einen Teil des nicht weiter bezeichneten Gehäuses des erfindungsgemäßen Elektromotors bildet, aus Stirnflanschen 60, zwischen denen die Statorbleche 41 und der Statormantel 50 mittels Bolzen 62 axial verspannt sind, sowie der Statorwicklung 70 aufgebaut.

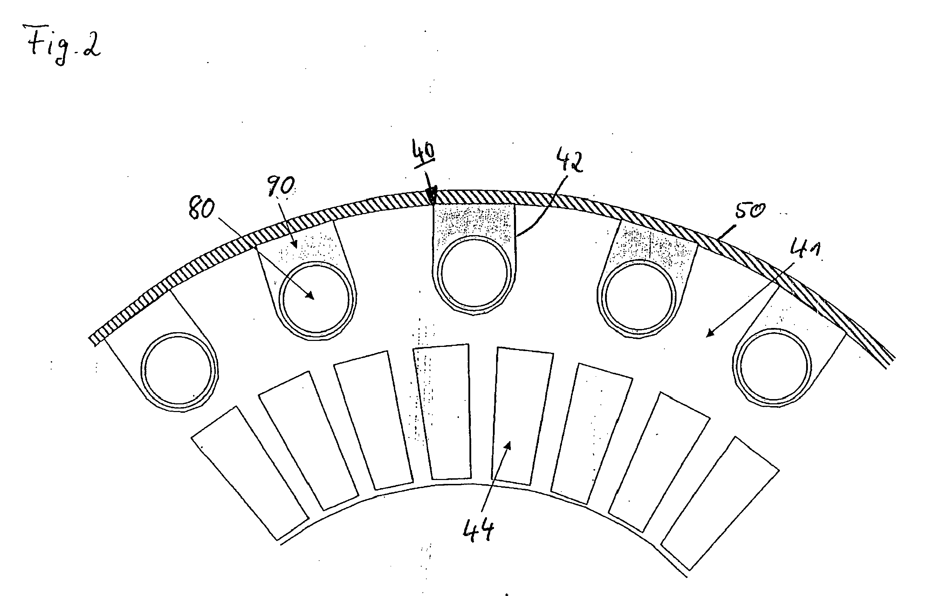

Die Statorbleche 41 haben einen im Wesentlichen kreisringförmigen Aufbau und bestehen aus einer geeigneten Eisenlegierung. Der Innendurchmesser der Statorbleche 41 ist geringfügig größer als der Außendurchmesser des Rotors 20. Die Statorbleche 41 sind zum Statorkern zusammengefasst, d.h., sie sind deckungsgleich aufeinander gestapelt und bilden so einen Zylinder, der den Rotor 20 koaxial umgibt. Die Länge des Statorkerns entspricht der Länge des Rotors 20. Von der Innenseite der Statorbleche 41 erstrecken sich radial verlaufende und im Wesentlichen rechteckige Ausnehmungen, die Statornuten 44 bilden (vgl. Fig. 2). In diesen Statornuten 44 ist die Statorwicklung 70 untergebracht, deren nicht näher bezeichnete Wickelköpfe zu beiden Seiten des Statorkerns aus diesem herausragen.

Der Statormantel 50 ist im Wesentlichen zylindrisch, wobei sein Innendurchmesser dem Außendurchmesser der Statorbleche 41 entspricht, die er koaxial umgibt. Seine axiale Länge entspricht etwa der Länge des Statorkerns plus der Länge der beiden Wickelköpfe. Der Statormantel 50 ist axial so ausgerichtet, dass er sowohl die Statorbleche 41 wie auch die Statorwicklung 70 vollständig umschließt, d.h., die Wickelköpfe der Statorwicklung 70 ragen nicht aus dem Statormantel 50 heraus. Im vorliegenden Ausführungsbeispiel besteht der Statormantel 50 aus einem rostfreien Edelstahl.

Die Stirnflansche 60 bilden den linken und rechten Abschluss des Statormantels 50. Sie sind durch die Bolzen 62 gegen die Enden den Statormantels 50 verspannt. Die Stirnflansche 60 sind identisch im Wesentlichen kreisringförmig aufgebaut und können z.B. aus einem geeigneten Gusswerkstoff bestehen. Der Außendurchmesser der Stirnflansche 60 entspricht dem Außendurchmesser des Statormantels 50, ihr Innendurchmesser ist größer als der Außendurchmesser des Rotors 20. Zwischen den Innenseiten der Stirnflansche 60 und den Statorblechen 41 sind Distanzhülsen 64 angeordnet, die die Statorbleche 41 in der gewünschten Position im Statormantel 50 fixieren.

Wie weiter aus Fig.1 zu sehen ist, sind die Lagereinheiten 12, 14 an den Stirnflanschen 60 befestigt. Die Flanschverbindungen zwischen den Stirnflanschen 60 und dem Statormantel 50 sowie den Lagereinheiten 12, 14 sind jeweils abgedichtet, sodass der gesamte Motorinnenraum gegen die Umgebung mediumsdicht, insbesondere flüssigkeitsdicht verschlossen ist.

Durch die vorbeschriebene Abdichtung des Motorinnenraums gegen die Umgebung ist es möglich, ein durch Hohlräume und Kanäle im Motorinneren zirkulierendes erstes Kühlmedium in den Motorinnenraum einzufüllen. Als Kühlmedium wird üblicherweise Öl verwendet. Die im Motorinneren befindlichen Hohlräume und Kanäle bilden dabei den oben erwähnten Innenkühlkreislauf des Wärmetauschers 40. Die Zirkulation des ersten Kühlmediums wird dabei durch Schwerkraft sowie die Rotationsbewegung des Rotors 20 gewährleistet.

Der erfindungsgemäße Elektromotor entsprechend Fig.1 weist weiterhin Mediumsführungskanäle 80 auf. Diese verlaufen in der Darstellung horizontal, also achsparallel zur Motorwelle 10, durch den Stator 30. Im gezeigten Ausführungsbeispiel sind die Mediumsführungskanäle 80 durch Mediumsführungsrohre gebildet, die durch entsprechende Ausnehmungen in den Statorblechen 40 hindurch verlaufen. Die Mediumsführungsrohre 80 enden in den Flanschen 60 und bilden hier Zuströmöffnungen 82 sowie Abströmöffnungen 84, über die die Mediumsführungsrohre 80 mit der Umgebung in Verbindung stehen. Das den Motor umgebende Fördermedium, das beispielsweise Wasser sein kann, kann so als zweites Kühlmedium die Mediumsführungsrohre 80, die Teil des Außenkühlkreislauf sind, durchfließen und Wärme aus dem Motor abführen. Die Mediumsführungsrohre 80 sind gegen die Flansche 60 mediumsdicht abgedichtet, um die Kapselung des Motorinnenraums gegen die Umgebung zu gewährleisten.

Fig. 2 zeigt einen Ausschnitt einer Querschnittdarstellung entlang eines Statorblechs 41 des Ausführungsbeispiels entsprechend Fig.1 des erfindungsgemäßen Motors.

Wie in Fig. 2 gezeigt und bereits vorstehend erwähnt worden ist, sind die Statorbleche 41 im Wesentlichen kreisringförmig aufgebaut und werden vom Statormantel 50 umschlossen. Sie weisen außerdem U-förmige Ausnehmungen 42 auf, durch die die Mediumsführungsrohre 80 geführt sind. Die Ausnehmungen 42 befinden sich am Außenumfang der Statorbleche 41 und sind radial nach außen offen, sodass der bogenförmige Bogen der Ausnehmung 42 radial nach innen weist. Die Ausnehmungen 42 der Statorbleche 41 sind weiterhin in gleichmäßiger Teilung entlang des Außenumfangs der Statorbleche 41 angeordnet, wobei ihr Abstand in Umfangsrichtung größer ist als die Breite der Ausnehmungen 42, gemessen in Umfangsrichtung. lhr Querschnitt ist größer als der Querschnitt der Mediumsführungsrohre 80. Die Statorbleche 41 sind so ausgerichtet, dass die Ausnehmungen 42 der aufeinanderfolgenden Statorbleche 41 jeweils miteinander fluchten. Dadurch bilden die Ausnehmungen 42 Mediumsführungskanäle 90 für den Innenkühlkreislauf für das im Motorinnenraum eingefüllte erste Kühlmedium. Diese Mediumsführungskanäle 90 werden im gezeigten Ausführungsbeispiel am Außenumfang der Statorbleche 41 durch die Innenseite des Statormantels 50 begrenzt und umschließen mit ihrem nach Innen gerichteten Abschnitt die Mediumsführungsrohre 80 des Außenkühlkreislaufs. Auf diese Weise gibt das erste Kühlmedium im Motorinnenraum gleichzeitig Wärme an das zweite Kühlmedium ab, wenn dieses durch die Mediumsführungsrohre 80 fließt und wenn es den Statormantel 50 an dessen Außenseite umströmt. In Fig. 2 sind weiterhin die im Wesentlichen rechteckigen Ausnehmungen, die die Statornuten 44 bilden, zu sehen, die sich vom Innenumfang der Statorbleche 41 radial in Richtung des Außenumfangs erstrecken.

Während des Betriebs erwärmt sich der Elektromotor. Um Schäden am Motor zu verhindern muss diese Wärme abgeführt werden. Da sich der Motor im Betrieb vollständig unter Wasser befindet geschieht dies einerseits über die Außenfläche des Statormantels 50, andererseits auch über die Im Stator 30 verlaufenden Mediumsführungskanäle 80.

Im Inneren des gekapselten Motors zirkuliert aufgrund der Schwerkraft sowie der Rotationsbewegung des Rotors 20 das erste Kühlmittel im geschlossenen Innenkühlkreislauf. Wie bereits erwähnt, wird dieser Kühlkreislauf durch die Mediumsführungskanäle 90 sowie durch die nicht näher bezeichnete Kanäle in den Statornuten 44 und dem Spalt zwischen Rotor 20 und Stator 30 gebildet. Während das erste Kühlmittel durch die Kanäle in den Statornuten 44 und dem Spalt zwischen Rotor 20 und Stator 30 strömt, nimmt es Energie in Form der Verlustwärme von dem Rotor 20 und dem Stator 30 auf und strömt weiter durch die Mediumsführungskanäle 90. Die Mediumsführungskanäle 90, und damit das erste Kühlmedium, werden durch das zweite Kühlmedium des offenen Außenkühlkreislaufs gekühlt, indem dieses durch die Mediumsführungskanäle 80 unmittelbar an den Mediumsführungskanälen 90 entlang geführt wird. Das zweite Kühlmedium nimmt dabei sowohl Wärme direkt von den Mediumsführungskanälen 90, wie auch indirekt die von den Mediumsführungskanälen 90 an die Statorbleche 41 abgegebene Wärme auf.

Im Ausführungsbeispiel entsprechend Fig. 2 verlaufen die Mediumsführungskanäle 80 durch die Ausnehmungen 42 in den Statorblechen 41. Da diese Ausnehmungen 42 die Mediumsführungskanäle 90 des geschlossenen Innenkühlkreislaufs bilden, dient die gesamte Umfangsfläche der Mediumsführungskanäle 80 als Wärmeaustauschfläche. Die Mediumsführungskanäle 90 des Innenkühlkreislaufs werden weiterhin von dem Statormantel 50 begrenzt. Dieser wird an seiner Außenseite vom zu fördernden Medium, das das zweite Kühlmedium bildet, umspült. Dadurch bildet die Begrenzungsfläche zwischen dem Statormantel 50 und den Mediumsführungskanälen 90 des Innenkühlkreislaufs eine weitere Wärmeaustauschfläche.

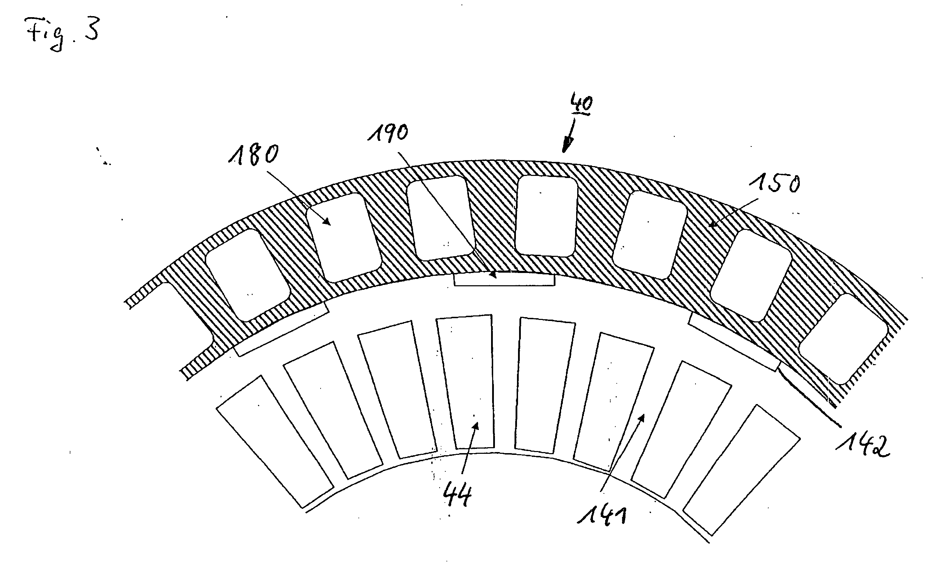

Im Folgenden wird ein weiteres Ausführungsbeispiel des erfindungsgemäßen Elektromotors im Zusammenhang mit der Fig. 3 erläutert. Dabei wird lediglich auf die Unterschiede zum vorstehend beschriebenen ersten Ausführungsbeispiel eingegangen. Bau- und funktionsgleiche Elemente des zweiten Ausführungsbeispiels weisen die gleichen Bezugszeichen wie bei dem ersten Ausführungsbeispiel auf. Bezugszeichen für funktionsgleiche aber anders gestaltete Elemente sind um 100 erhöht.

Fig. 3 zeigt ein weiteres Ausführungsbeispiel des erfindungsgemäßen Elektromotors. Der Statormantel 150 weist eine größere Stärke auf, als der Statormantel 50 entsprechend Fig. 2. Weiterhin sind im Statormantel 150 über dessen Umfang gleichmäßig verteilt Mediumsführungskanäle 180 für das zweite Kühlmedium angeordnet. Diese Kanäle 180 verlaufen achsparallel zur Drehachse des Rotors 20. Sie haben einen im Wesentlichen rechteckigen Querschnitt, wobei ihre radiale Ausdehnung etwa 2/3 der Dicke des Statormantels 150 entspricht. Ihr Abstand in Umfangsrichtung ist im dargestellten Ausführungsbeispiel kleiner als ihre Ausdehnung in Umfangsrichtung. Da der Statormantel 150 eine entsprechende Dicke aufweist, kann er durch einen Gießvorgang aus einem entsprechenden Gusswerkstoff hergestellt werden. Die Statorbleche 141 weisen Ausnehmungen 142 auf, die an deren Außenumfang angeordnet sind. Die Ausnehmungen 142 haben einen im Wesentlichen rechteckigen Querschnitt, wobei die längere Seite des Rechtecks tangential ausgerichtet ist. Die Länge dieser Seite ist größer als die Umfangsausdehnung eines Mediumsführungskanals 180 plus der dem Abstand zwischen zwei Mediumsführungskanälen 180. Auf diese Weise überdeckt die durch den Statormantel 150 gebildete Seite der Ausnehmungen 142 immer zwei Mediumsführungskanäle 180 zumindest teilweise. Die Ausnehmungen 142 sind gleichmäßig am Umfang der Statorbleche 141 verteilt und bilden Mediumsführungskanäle 190 für das erste Kühlmedium des Innenkühlkreislaufs. Diese Mediumsführungskanäle 190 werden, wie in Fig. 3 zu sehen, an ihren in radialer Richtung außenliegenden Seiten von Statormantel 150 begrenzt. Die Statorbleche 141 weisen weiterhin Ausnehmungen entsprechend Fig. 2 auf, die die Statornuten 44 bilden.

Der geschlossene Innenkühlkreislauf entsprechend dem Ausführungsbeispiel in Fig. 3 wird durch die Mediumsführungskanäle 190 sowie durch die nicht näher bezeichnete Kanäle in den Statornuten 44 und dem Spalt zwischen Rotor 20 und Stator 30 gebildet. Der Wärmetransport des Innenkühlkreislaufs entspricht dem zum ersten Ausführungsbeispiel entsprechend Fig. 2 beschriebenen. Im Gegensatz zu dem zuvor beschriebenen Ausführungsbeispiel wird der offene Außenkühlkreislauf hier durch Mediumsführungskanäle 180 gebildet, die in axialer Richtung durch den Statormantel 150 verlaufen. Diese Kanäle 180 wurden während der Herstellung des Statormantels 150 beispielsweise während des Gießens geschaffen. Sie können aber auch nachträglich durch eine spanende Bearbeitung, wie z.B. Bohren oder Fräsen gebildet werden.

Das zweite Kühlmedium, das auch hier i.d.R. das zu fördernde Medium ist, durchströmt die Mediumsführungskanäle 180 und kühlt dabei den Statormantel 150 ab, der zuvor die vom Innenkühlkreislauf an ihn übertragene Wärme aufgenommen hat. Selbstverständlich gibt der Statormantel 150, ebenso wie im zuvor beschriebenen Ausführungsbeispiel, Wärme über seine Außenfläche an das zweite Kühlmedium ab, das den Motor umspült.

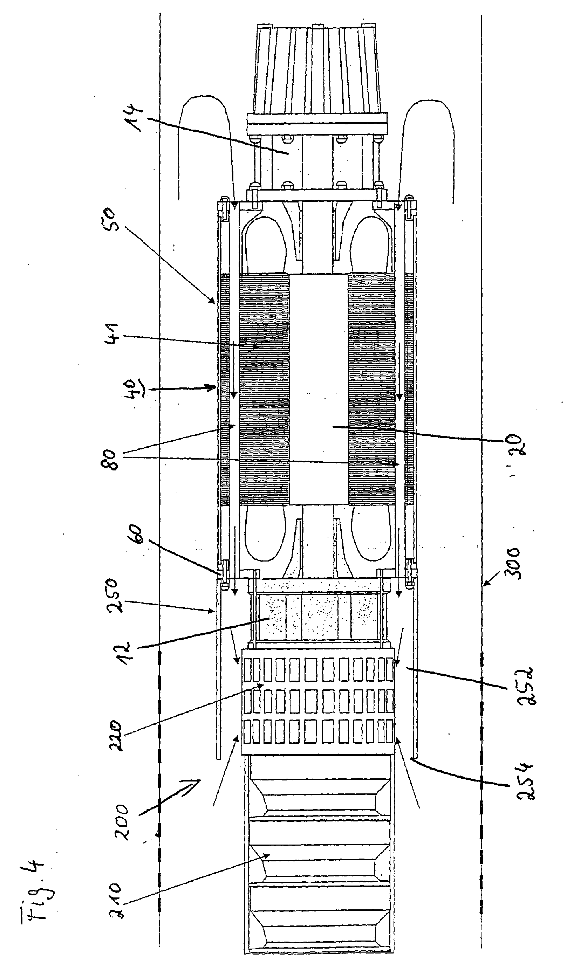

Fig. 4 zeigt eine Motor-Pumpen-Einheit mit dem erfindungsgemäßen Motor entsprechend Fig.1. An der in der Darstellung linken Seite dieses Motor ist eine Pumpeneinheit 200 in axialer Richtung an die Lagereinheit 12 angeflanscht, die über das in Fig.1 dargestellte linke Wellenende 11 der Motorwelle 10 angetrieben wird. Die Pumpeneinheit 200 besteht aus den Pumpenstufen 210 und einem den Pumpenstufen 210 ansaugseitig zwischen dem Motor und den Pumpenstufen 210 vorgeschalteten Saugsieb 220. Die Pumpeneinheit 200 hat einen zylindrischen Querschnitt. Ihr Durchmesser ist kleiner als der Durchmesser des Statormantels 50 und entspricht annähernd dem Außendurchmesser der Lagereinheiten 12, 14.

Weiterhin ist an der in der Darstellung linken Seite des Motors ein Kurzsaugmantel 250 an dem Stirnflansch 60 angeordnet. Der Kurzsaugmantel 250 ist ein zylindrische Rohr, dessen Länge der Länge des Saugsiebs 220 plus der Länge der Lagereinheit 12 entspricht und der das Saugsieb 220 und die Lagereinheit 12 koaxial umschließt. Der Außendurchmesser des Kurzsaugmantels 250 entspricht dem Außendurchmesser des Statormantels 50. Seine Wandstärke entspricht etwa der des Statormantels 50. Der Kurzsaugmantels 250 weist an seiner rechten Seite einen nach innen gerichteten Flansch auf, mit dem er am Stirnflansch 60 des Motors verschraubt ist. Der Flansch hat einen Innenradius, der größer ist, als äußerste radiale Abstand der Abströmöffnungen 84 von der Rotationsachse des Rotors 20, sodass der Flansch des Kurzsaugrohrs 250 die Abströmöffnungen 84 nicht überdeckt. Ist sein Innenradius kleiner, d.h., würde er die Abströmöffnungen 84 überdecken, so müssten an den entsprechenden Stellen Öffnungen im Flansch vorgesehen werden. Durch diesen Kurzsaugmantel 250 wird um das Saugsieb 220 herum ein hohlzylindrischer Raum 252 mit einer kreisringförmigen Einlassöffnung 254 gebildet.

Weiterhin ist in Fig. 4 ein Brunnenrohr 300 dargestellt, dessen Innendurchmesser größer ist, als der Außendurchmesser der Motor-Pumpen-Einheit. Es ist zu bemerken, dass Brunnenrohre in der Praxis üblicherweise vertikal verlaufen und dass die Motor-Pumpen-Einheit entsprechend vertikal in diesen Bohrloch eingebracht ist, wobei die in Fig. 4 rechte Seite das untere Ende bildet.

Der im Zusammenhang mit Fig. 4 beschriebene Kurzsaugmantel 250 bewirkt eine Regelung des Stroms des zweiten Kühlmediums durch die Mediumsführungskanäle 80, 180. Entsprechend der Größe der ringförmigen Einlassöffnung 254 wird ein Teil des Fördermediums durch diese ringförmige Einlassöffnung 254 angesaugt, ein anderer Teil strömt durch die Mediumsführungskanäle 80, 180. Über die Länge und den Durchmesser der Kurzsaugmantels 250 kann die zuvor beschriebene Aufteilung des angesaugten Fördermediums reguliert werden. Wird der Durchmesser des Kurzsaugmantels 250 verkleinert, verkleinert sich auch die Einlassöffnung 254 und es strömt bei konstanter Gesamtfördermenge der Pumpeneinheit 200 mehr Fördermedium durch die Mediumsführungskanäle 80, 180, wodurch mehr Wärme vom Motor abgeführt werden kann. Dadurch kann die Kühlleistung des Wärmetauschers erhöht werden. Durch eine Verringerung der Länge der Kurzsaugmantels 250 verringert sich auch die durch ihn verdeckte Ansaugfläche des Saugsiebs 220 und es wird mehr Fördermedium durch das Saugsieb 220 angesaugt. Entsprechend wird weniger Fördermedium durch die Mediumsführungskanäle 80, 180 geführt, wodurch sich die Kühlleistung verringert. Durch die vorstehend beschriebenen Veränderungen an dem Kurzsaugmantel 250 ist es möglich, die Kühlleistung entsprechend den örtlichen Bedingungen einzustellen bzw. auf sich verändernde Bedingungen zu reagieren.

Selbstverständlich ist es möglich, die Mediumsführungskanäle 80, 180, 90, 190 der beiden Kühlkreisläufe mit beliebigen Querschnitten auszuführen. So können auch die Mediumsführungskanäle 80, 180 des Außenkühlkreislaufs einen runden Querschnitt haben oder in Anpassung an des Ringquerschnitt des Statormantels 150 trapezförmig ausgestaltet sein.

Je nach benötigter Kühlleistung kann die Anzahl der Mediumsführungskanäle 80, 180, 90, 190 variieren. Auch die Verteilung der Mediumsführungskanäle 80, 180, 90, 190 kann ungleichmäßig sein, um beispielsweise die Wärmeabgabe in bestimmten Bereichen zu verstärken oder abzuschwächen.

Die Zu- und Ausströmöffnungen 82, 84 der Mediumsführungskanäle 80, 180 können sich trichterförmig nach außen erweitern, um den Querschnittsübergang strömungsgünstig zu gestalten und Turbulenzen zu vermeiden, die zu erhöhtem Strömungswiderstand und Verschleiß führen. Die Zuströmöffnungen 82 können hierzu beispielsweise auch an der Außenseite des Statormantels 50, 150 münden.

Weiterhin kann die Form des Kurzsaugmantels 250 von der reinen Zylinderform abweichen und ganz oder teilweise z.B. kegelig sein.

Folgende Ausführungsformen eines erfindungsgemäßen Elektromotors für den Unterwassereinsatz sind beispielsweise möglich:
1. Elektromotor für den Unterwassereinsatz, insbesondere für Unterwasserpumpen, mit einem Rotor (20), mit einem den Rotor (20) umschließenden Stator (30) und mit einem Wärmetauscher (40), der einen geschlossenen Innenkühlkreislauf, in dem ein erstes Kühlmedium zirkuliert, und einen Außenkühlkreislauf aufweist, in dem ein zweites Kühlmedium zirkuliert,
   **dadurch gekennzeichnet, dass** der Außenkühlkreislauf offen ist und dass mindestens ein Mediumsführungskanal (90, 190) des Innenkühlkreislaufs im Querschnittsbereich der Statorbleche (41, 141) verlaufend angeordnet ist.
2. Elektromotor nach Ausführungsform 1,
   **dadurch gekennzeichnet, dass** der Außenkühlkreislauf über wenigstens eine Zuströmöffnung (82) und mindestens eine Abströmöffnung (84) mit dem zweiten Kühlmedium in Verbindung steht.
3. Elektromotor nach Ausführungsform 2,
   **dadurch gekennzeichnet, dass** der wenigstens eine Mediumsführungskanal (80, 180) des offenen Außenkühlkreislaufs mit den Zu- und Abströmöffnungen (82, 84) an den Stirnseiten des Stators (30) mündet.
4. Elektromotor nach den Ausführungsformen 2 oder 3,
   **dadurch gekennzeichnet, dass** die Mündungsöffnungen (82, 84) des wenigstens einen Mediumsführungskanals (80, 180) des offenen Außenkühlkreislaufs strömungsgünstig gestaltet sind.
5. Elektromotor nach einer der Ausführungsformen 1 bis 4,
   **dadurch gekennzeichnet, dass** der wenigstens eine Mediumsführungskanal (80, 180) des Außenkühlkreislaufs in radialer Richtung im Stator (30) verlaufend angeordnet ist.
6. Elektromotor nach einer der Ausführungsformen 1 bis 5,
   **dadurch gekennzeichnet, dass** der wenigstens eine Mediumsführungskanal (80, 180) des Außenkühlkreislaufs in axialer Richtung durch den Stator (30) verlaufend angeordnet ist.
7. Elektromotor nach einer der Ausführungsformen 1 bis 6,
   **dadurch gekennzeichnet, dass** der mindestens eine Mediumsführungskanal (90, 190) des Innenkühlkreislaufs in radialer Richtung im Bereich des Außenumfangs der Statorbleche (41) verlaufend angeordnet ist.
8. Elektromotor nach einer der Ausführungsformen 1 bis 7,
   **dadurch gekennzeichnet, dass** der mindestens eine Mediumsführungskanal (90, 190) des Innenkühlkreislaufs in radialer Richtung nach außen hin offen ist und dass der Mediumsführungskanal (90, 190) durch den Statormantel (50, 150) abgeschlossen ist.
9. Elektromotor nach einer der Ausführungsformen 1 bis 8,
   **dadurch gekennzeichnet, dass** mehrere Mediumsführungskanäle (80, 180) für den Außenkühlkreislauf vorgesehen sind.
10. Elektromotor nach einer der Ausführungsformen 1 bis 9,
   **dadurch gekennzeichnet, dass** die Mediumsführungskanäle (80, 180) des Außenkühlkreislaufs gleichmäßig im Umfangsrichtung im Stator (30) verteilt sind.
11. Elektromotor nach einer der Ausführungsformen 1 bis 10,
   **dadurch gekennzeichnet, dass** mehrere Mediumsführungskanäle (90, 190) für den Innenkühlkreislauf vorgesehen sind.
12. Elektromotor nach einer der Ausführungsformen 1 bis 11,
   **dadurch gekennzeichnet, dass** die Mediumsführungskanäle (90, 190) des Innenkühlkreislaufs gleichmäßig im Umfangsrichtung im Bereich des Außenumfangs der Statorbleche (41, 141) verteilt sind.
13. Elektromotor nach einer der Ausführungsformen 1 bis 12,
   **dadurch gekennzeichnet, dass** die Mediumsführungskanäle (80) des offenen Außenkühlkreislaufs durch Mediumsführungsrohre (80) gebildet sind.
14. Elektromotor nach Ausführungsform 13,
   **dadurch gekennzeichnet, dass** die Mediumsführungsrohre (80) des Außenkühlkreislaufs in den Ausnehmungen (42) in den Statorblechen (41) angeordnet sind, welche die Mediumsführungskanäle (90) des Innenkühlkreislaufs bilden.
15. Elektromotor nach Ausführungsform 14,
   **dadurch gekennzeichnet, dass** die Ausnehmungen (42), welche die Mediumsführungskanäle (90) für des Innenkühlkreislaufs bilden kreisförmige Ausnehmungen sind, deren Durchmesser größer ist als der Außendurchmesser der Mediumsführungsrohre (80) des Außenkühlkreislaufs.
16. Elektromotor nach einer der Ausführungsformen 1 bis 12,
   **dadurch gekennzeichnet, dass** die Mediumsführungskanäle (180) des Außenkühlkreislaufs im Statormantel (150) angeordnet sind.
17. Elektromotor nach Ausführungsform 16,
   **dadurch gekennzeichnet, dass** die Mediumsführungskanäle (180) des Außenkühlkreislaufs im Statormantel (150) durch einen Gießvorgang gebildet sind.
18. Elektromotor nach Ausführungsform 16,
   **dadurch gekennzeichnet, dass** die Mediumsführungskanäle (180) des Außenkühlkreislaufs im Statormantel (150) durch eine spanende Bearbeitung gebildet sind.
19. Elektromotor nach einer der Ausführungsformen 16 bis 18,
   **dadurch gekennzeichnet, dass** der Statormantel (50, 150) modular aus in Umfangsrichtung aneinanderfügbare Kreissegmenten gebildet ist.
20. Elektromotor nach einer der Ausführungsformen 16 bis 18,
   **dadurch gekennzeichnet, dass** der Statormantel (50, 150) modular durch axial aneinanderfügbare Ringsegmente gebildet ist.
21. Elektromotor nach einer der Ausführungsformen 1 bis 20,
   **dadurch gekennzeichnet, dass** die Durchflussmenge des durch die Mediumsführungskanäle (80, 180) des Außenkühlkreislaufs fließenden zweiten Kühlmediums einstellbar ist.
22. Elektromotor nach einer der Ausführungsformen 1 bis 21,
   **dadurch gekennzeichnet, dass** zur Regulierung der Durchflussmenge des durch die Mediumsführungskanäle (80, 180) des Außenkühlkreislaufs fließenden zweiten Kühlmediums am pumpenseitigen Ende des Stators (30) ein Regelelement (250) angeordnet ist.
23. Elektromotor nach Ausführungsform 22,
**dadurch gekennzeichnet, dass** das Regelelement (250) eine im Wesentlichen zylinderförmige Drossel ist.

### Bezugszeichen

- 10: Welle
- 11: Wellenende
- 12, 14: Lagereinheiten
- 16: Dichtungsabschnitte
- 20: Rotor
- 30: Stator
- 40: Wärmetauscher
- 41, 141: Statorbleche
- 42, 142: Ausnehmungen
- 44: Statornuten
- 50, 150: Statormantel
- 60: Stirnflansche
- 62: Bolzen
- 64: Distanzhülsen
- 70: Statorwicklung
- 80, 180: Mediumsführungskanäle des Außenkreislaufs
- 82: Zuströmöffnung
- 84: Abströmöffnung
- 90, 190: Mediumsführungskanäle des Innenkreislaufs
- 200: Pumpeneinheit
- 210: Pumpenstufen
- 220: Saugsieb
- 250: Kurzsaugmantel
- 252: hohlzylindrischer Raum
- 254: Einlassöffnung
- 300: Bohrloch

## Patentansprüche

1. Elektromotor für den Unterwassereinsatz, insbesondere für Unterwasserpumpen, mit einem Rotor (20), mit einem den Rotor (20) umschließenden Stator (30) und mit einem Wärmetauscher (40), der einen geschlossenen Innenkühlkreislauf, in dem ein erstes Kühlmedium zirkuliert, und einen Außenkühlkreislauf aufweist, in dem ein zweites Kühlmedium zirkuliert,
**dadurch gekennzeichnet, dass** der Außenkühlkreislauf offen ist und dass mindestens ein Mediumsführungskanal (90, 190) des Innenkühlkreislaufs im Querschnittsbereich der Statorbleche (41, 141) verlaufend angeordnet ist.

2. Elektromotor nach Anspruch 1,
**dadurch gekennzeichnet, dass** der Außenkühlkreislauf über wenigstens eine Zuströmöffnung (82) und mindestens eine Abströmöffnung (84) mit dem zweiten Kühlmedium in Verbindung steht.

3. Elektromotor nach Anspruch 2,
**dadurch gekennzeichnet, dass** der wenigstens eine Mediumsführungskanal (80, 180) des offenen Außenkühlkreislaufs mit den Zu- und Abströmöffnungen (82, 84) an den Stirnseiten des Stators (30) mündet.

4. Elektromotor nach den Ansprüchen 2 oder 3,
**dadurch gekennzeichnet, dass** die Mündungsöffnungen (82, 84) des wenigstens einen Mediumsführungskanals (80, 180) des offenen Außenkühlkreislaufs strömungsgünstig gestaltet sind.

5. Elektromotor nach einem der Ansprüche 1 bis 4,
**dadurch gekennzeichnet, dass** der wenigstens eine Mediumsführungskanal (80, 180) des Außenkühlkreislaufs in radialer Richtung im Stator (30) verlaufend angeordnet ist.

6. Elektromotor nach einem der Ansprüchen 1 bis 5,
**dadurch gekennzeichnet, dass** der wenigstens eine Mediumsführungskanal (80, 180) des Außenkühlkreislaufs in axialer Richtung durch den Stator (30) verlaufend angeordnet ist.

7. Elektromotor nach einem der Ansprüche 1 bis 6,
**dadurch gekennzeichnet, dass** der mindestens eine Mediumsführungskanal (90, 190) des Innenkühlkreislaufs in radialer Richtung im Bereich des Außenumfangs der Statorbleche (41) verlaufend angeordnet ist.

8. Elektromotor nach einem der Ansprüche 1 bis 7,
**dadurch gekennzeichnet, dass** der mindestens eine Mediumsführungskanal (90, 190) des Innenkühlkreislaufs in radialer Richtung nach außen hin offen ist und dass der Mediumsführungskanal (90, 190) durch den Statormantel (50, 150) abgeschlossen ist.

9. Elektromotor nach einem der Ansprüchen 1 bis 8,
**dadurch gekennzeichnet, dass** die Mediumsführungskanäle (80) des offenen Außenkühlkreislaufs durch Mediumsführungsrohre (80) gebildet sind.

10. Elektromotor nach Anspruch 9,
**dadurch gekennzeichnet, dass** die Mediumsführungsrohre (80) des Außenkühlkreislaufs in den Ausnehmungen (42) in den Statorblechen (41) angeordnet sind, welche die Mediumsführungskanäle (90) des Innenkühlkreislaufs bilden.

11. Elektromotor nach Anspruch 10,
**dadurch gekennzeichnet, dass** die Ausnehmungen (42), welche die Mediumsführungskanäle (90) für des Innenkühlkreislaufs bilden kreisförmige Ausnehmungen sind, deren Durchmesser größer ist als der Außendurchmesser der Mediumsführungsrohre (80) des Außenkühlkreislaufs.

12. Elektromotor nach einem der Ansprüchen 1 bis 10,
**dadurch gekennzeichnet, dass** die Mediumsführungskanäle (180) des Außenkühlkreislaufs im Statormantel (150) angeordnet sind.

13. Elektromotor nach Anspruch 12,
**dadurch gekennzeichnet, dass** der Statormantel (50, 150) modular durch axial aneinanderfügbare Ringsegmente gebildet ist.

14. Elektromotor nach einem der Ansprüche 1 bis 13,
**dadurch gekennzeichnet, dass** die Durchflussmenge des durch die Mediumsführungskanäle (80, 180) des Außenkühlkreislaufs fließenden zweiten Kühlmediums einstellbar ist.

15. Elektromotor nach einem der Ansprüche 1 bis 14,
**dadurch gekennzeichnet, dass** zur Regulierung der Durchflussmenge des durch die Mediumsführungskanäle (80, 180) des Außenkühlkreislaufs fließenden zweiten Kühlmediums am pumpenseitigen Ende des Stators (30) ein Regelelement (250) angeordnet ist.
